# NEUE EUROPÄISCHE PATENTSCHRIFT

(11) **EP 2 253 059 B2**
(45) Veröffentlichungstag und Bekanntmachung des Hinweises auf die Entscheidung über den Einspruch: **25.07.2018**
(45) Hinweis auf die Patenterteilung: 04.11.2015
(21) Anmeldenummer: 09719761.0
(22) Anmeldetag: 03.03.2009
(51) Int. Cl.: B60L 11/18, H02J 3/32

(54) **ELEKTRISCHE LADE- UND/ODER ENTLADEVORRICHTUNG**
ELECTRICAL CHARGING AND/OR DISCHARGING DEVICE
DISPOSITIF DE CHARGEMENT ET/OU DE DECHARGEMENT ELECTRIQUE

(30) Priorität: 14.03.2008 CH 377082008
(43) Veröffentlichungstag der Anmeldung: 24.11.2010
(73) Patentinhaber: Innosense AG, 8004 Zürich (CH)
(72) Erfinder: DUSTMANN, Cord-Heinrich, 6839 Sagno (CH); URSIN, Helfried, 3860 Meiringen (CH)
(74) Vertreter: Dilg, Haeusler, Schindelmann Patentanwaltsgesellschaft mbH
(86) Internationale Anmeldenummer: PCT/EP2009/001475
(87) Internationale Veröffentlichungsnummer: WO 2009/112175

(56) Entgegenhaltungen:
- EP-A- 1 122 856
- WO-A-03/062018
- CA-A1- 2 653 938
- BOJRUP M ET AL: "A dual purpose battery charger for electric vehicles" POWER ELECTRONICS SPECIALISTS CONFERENCE, 1998. PESC 98 RECORD. 29TH A NNUAL IEEE FUKUOKA, JAPAN 17-22 MAY 1998, NEW YORK, NY, USA,IEEE, US, Bd. 1, 17. Mai 1998 (1998-05-17), Seiten 565-570, XP010294935 ISBN: 978-0-7803-4489-1

## Beschreibung

### Stand der Technik

Die Erfindung geht aus von einer elektrischen Lade- und/oder Entladevorrichtung nach dem Oberbegriff des Anspruchs 1.

Es sind bereits ganz oder teilweise elektrisch angetriebene Fahrzeuge sowie Systeme und Verfahren, die solche Fahrzeuge umfassen, bekannt, bei denen durch Nutzung einer elektrischen Speicherkapazität von Batterien der Fahrzeuge in Zeiten, in denen die Fahrzeuge nicht zu Fahrten genutzt werden, elektrischer Strom in ein öffentliches Stromverteilernetz eingespeist wird, um eine wechselnde Belastung des Stromverteilernetzes auszugleichen. Diese Lösungen gehen davon aus, dass eine Information über einen Ladezustand und eine Verfügbarkeit der Batterie oder einer Gruppe von Batterien einer zentralen Stelle des Stromverteilernetzes übermittelt wird und diese zentrale Stelle entsprechend einer Belastung des Stromverteilernetzes eine Energieanforderungs- und/oder Energieabgabeinformation an das Fahrzeug abgibt.

Dokument WO 03 06 2018 zeigt eine elektrische Lade- und/oder Entladevorrichtung. US 2008/0039979 A1 beschreibt Systeme und Verfahren für ein Leistungsaggregationssystem.

### Vorteile der Erfindung

Die Erfindung betrifft eine elektrische Lade- und/oder Entladevorrichtung nach Anspruch 1.

Die Erfindung geht aus von einer elektrischen Lade- und/oder Entladevorrichtung, insbesondere für zumindest teilweise elektrisch angetriebene Fahrzeuge, mit einer Kontrolleinheit. Unter einer "Kontrolleinheit" soll in diesem Zusammenhang insbesondere eine Einheit verstanden werden, die eine Recheneinheit, eine Speichereinheit und insbesondere ein in der Speichereinheit gespeichertes Betriebsprogramm aufweist und insbesondere dazu vorgesehen ist, Aktoren zur Steuerung und/oder Regelung zu betätigen.

Es wird vorgeschlagen, dass die Kontrolleinheit dazu vorgesehen ist, ein selbsttätiges Laden und/oder Entladen und/oder Überführen in einen Bereitschaftsmodus zumindest eines elektrischen Energiespeichers zur dezentralen Pufferung eines Stromverteilernetzes durchzuführen, wodurch ein Ausgleich von lokalen, lastabhängigen Schwankungen von elektrischen Eigenschaften des Stromverteilernetzes zumindest teilweise erreicht und zugleich ein Aufwand für eine Kommunikation zwischen der elektrischen Lade- und/oder Entladevorrichtung und einer Einrichtung, die mit dem Stromverteilernetz in Zusammenhang steht, vermieden werden kann. Unter "selbsttätig" soll in diesem Zusammenhang insbesondere verstanden werden, dass die Kontrolleinheit dazu vorgesehen ist, über einen Beginn, eine Pause oder ein Beenden des Ladens und/oder Entladens und/oder Überführens in einen Bereitschaftsmodus des zumindest einen Energiespeichers eigenständig aufgrund der hinterlegten Programmierung zu entscheiden, und dass eine Kommunikation mit einer Einrichtung, die mit dem Stromverteilernetz in Zusammenhang steht, aktiv vermieden wird. Vorteilhaft kann eine elektrische Lade- und/oder Entladeleistung in Abhängigkeit einer Bauart und/oder eines Ladezustands des zumindest einen Energiespeichers gewählt sein. Vorzugsweise kann eine elektrische Leistung von etwa drei kW, die mit einer in einem privaten Haushalt üblichen Steckdose gehandhabt werden kann, als Lade- und/oder Entladeleistung gewählt sein.

Mit besonderem Vorteil können mit einem System zur dezentralen Stabilisierung eines Stromverteilernetzes unter Nutzung einer Speicherkapazität einer oder mehrerer Batterien in ganz oder teilweise elektrisch angetriebenen Fahrzeugen unterschiedliche Belastungen des Stromverteilernetzes ausgeglichen werden, wobei zwischen der Batterie oder den Batterien und/oder dem Fahrzeug und/oder den Fahrzeugen und einer zentralen Netzleitstelle keine Kommunikation erforderlich ist.

In einer vorteilhaften Ausgestaltung ist die Kontrolleinheit dazu vorgesehen, in zumindest einem Betriebsmodus eine Amplitude und/oder einen Effektivwert einer lokalen Netzspannung des Stromverteilernetzes zur Steuerung des Ladens und/oder Entladens und/oder Überführens in einen Bereitschaftsmodus des zumindest einen elektrischen Energiespeichers zu verwenden. Darüber hinaus kann die Kontrolleinheit vorteilhaft auch dazu vorgesehen sein, Regelvorgänge durchzuführen, bei denen insbesondere elektrische Parameter, die den zumindest einen Energiespeicher charakterisieren, als Regelgröße in einer Regelschleife verwendet werden.

Unter einer "lokalen" Netzspannung des Stromverteilernetzes soll in diesem Zusammenhang insbesondere eine Netzspannung verstanden werden, die an einer Steckdose verfügbar ist, die sich in einer Entfernung bis zu zehn Metern zu dem zumindest einen Energiespeicher befindet. Durch eine Steuerung des Ladens und/oder Entladens und/oder Überführens in einen Bereitschaftsmodus, die an der Höhe der lokalen Netzspannung orientiert ist, kann ein besonders effektiver Ausgleich der aktuellen, lokalen Belastung des Stromverteilernetzes erreicht werden. Vorzugsweise kann die Kontrolleinheit bei einer festgestellten, vergleichsweise niedrigen lokalen Netzspannung den zumindest einen Energiespeicher in das Stromverteilernetz zu dessen Unterstützung entladen. Dem Fachmann sind hierzu gängige Mittel zur Umwandlung von Gleichstrom in Netzwechselstrom bekannt. Bei einer festgestellten, vergleichsweise hohen lokalen Netzspannung kann die Kontrolleinheit den zumindest einen Energiespeicher vorzugsweise aus dem Stromverteilernetz laden, um dessen vergleichsweise hohe Kapazität zu verringern. Bei einer festgestellten, vergleichsweise mittleren lokalen Netzspannung kann die Kontrolleinheit den zumindest einen Energiespeicher vorzugsweise laden, wenn der Ladezustand niedrig ist, oder in Bereitschaft halten, wenn der Ladezustand in einem festgelegten, vergleichsweise hohen Bereich liegt. Vorteilhaft kann die Kontrolleinheit mit Messmitteln ausgestattet sein, mit denen eine Messung des Effektivwerts der lokalen Netzspannung an einer in der Nähe befindlichen Steckdose erfolgen kann. Dem Fachmann sind hierzu gängige Methoden bekannt. Grundsätzlich kann eine Information über die Amplitude und/oder den Effektivwert der Netzspannung auch durch andere Mittel durch Messung an einer in der Nähe befindlichen Steckdose bestimmt und mittels einer Datenleitung an die Kontrolleinheit weitergegeben werden.

Weiterhin wird vorgeschlagen, dass die Kontrolleinheit dazu vorgesehen ist, in zumindest einem Betriebsmodus eine Frequenz einer lokalen Netzspannung des Stromverteilernetzes zur Steuerung des Ladens und/oder Entladens und/oder Überführens in einen Bereitschaftsmodus des zumindest einen elektrischen Energiespeichers zu verwenden. Durch eine Steuerung des Ladens und/oder Entladens und/oder Überführens in einen Bereitschaftsmodus, die an der Höhe der Frequenz der lokalen Netzspannung orientiert ist, kann gleichfalls ein besonders effektiver Ausgleich der aktuellen Belastung des Stromverteilernetzes erreicht werden. Vorzugsweise kann die Kontrolleinheit bei einer festgestellten, vergleichsweise niedrigen Frequenz der lokalen Netzspannung den zumindest einen Energiespeicher in das Stromverteilernetz zu dessen Unterstützung entladen. Dem Fachmann sind hierzu gängige Mittel zur Umwandlung von Gleichstrom in Netzwechselstrom bekannt. Bei einer festgestellten, vergleichsweise hohen Frequenz der Netzspannung kann die Kontrolleinheit den zumindest einen Energiespeicher vorzugsweise aus dem Stromverteilernetz laden, um dessen vergleichsweise hohe Kapazität zu verringern. Vorteilhaft kann die Kontrolleinheit mit Messmitteln ausgestattet sein, mit denen eine Messung der Frequenz der lokalen Netzspannung an einer in der Nähe befindlichen Steckdose erfolgen kann. Dem Fachmann sind hierzu gängige Methoden bekannt. Grundsätzlich kann eine Information über die Frequenz der lokalen Netzspannung auch durch andere Mittel durch Messung an einer in der Nähe befindlichen Steckdose bestimmt und mittels einer Datenleitung an die Kontrolleinheit weitergegeben werden.

Ferner wird vorgeschlagen, dass die Kontrolleinheit dazu vorgesehen ist, in zumindest einem Betriebsmodus das Laden und/oder Entladen und/oder Überführen in einen Bereitschaftsmodus des zumindest einen elektrischen Energiespeichers zumindest teilweise abhängig von einer Tageszeit zu steuern. Durch eine Anpassung des Ladens und/oder Entladens und/oder Überführens in einen Bereitschaftsmodus des zumindest einen elektrischen Energiespeichers an durch Erfahrung bekannte Zeiten besonders großer oder besonders geringer Belastung des Stromverteilernetzes kann ein besonders effektiver Ausgleich der aktuellen, lokalen Belastung des Stromverteilernetzes erreicht werden. Vorteilhaft kann die Kontrolleinheit zur Feststellung der Tageszeit mit einer Uhr ausgestattet sein oder zu einer Uhr in einer datenmäßigen Verbindung stehen. Vorzugsweise wird die Kontrolleinheit in einer Zeit mit einer erfahrungsgemäß vergleichsweise hohen Belastung des Stromverteilernetzes den zumindest einen Energiespeicher in das Stromverteilernetz zu dessen Unterstützung entladen. Dem Fachmann sind hierzu gängige Mittel zur Umwandlung von Gleichstrom in Netzwechselstrom bekannt. Vorteilhaft kann die Kontrolleinheit eine anstehende Ladung des Energiespeichers zeitlich in eine Periode geringerer Belastung des Stromverteilernetzes verschieben. In einer Zeit mit einer erfahrungsgemäß vergleichsweise niedrigen Belastung des Stromverteilernetzes wird die Kontrolleinheit den zumindest einen Energiespeicher vorzugsweise aus dem Stromverteilernetz laden, um dessen vergleichsweise hohe Kapazität zu verringern. Vorteilhaft können Tageszeiten mit erfahrungsgemäß besonders hoher oder besonders niedriger Belastung des Stromverteilernetzes in der Kontrolleinheit, vorzugsweise durch manuelle Eingabe, hinterlegt sein.

Mit besonderem Vorteil ist die Kontrolleinheit dazu vorgesehen, in zumindest einem Betriebsmodus das Laden und/oder Entladen und/oder Überführen in einen Bereitschaftsmodus des zumindest einen elektrischen Energiespeichers zumindest teilweise abhängig von einer von dem zumindest einen elektrischen Energiespeicher aus dem Stromverteilernetz aufgenommenen Energiemenge und/oder von einer von dem zumindest einen elektrischen Energiespeicher in das Stromverteilernetz abgegebenen Energiemenge zu steuern. Auf diese Weise kann eine betragsmäßig definierte Ladungsmenge zum Ausgleich von lokalen, lastabhängigen Schwankungen des Stromverteilernetzes transferiert und eine Planung des Ausgleichs vereinfacht werden. Vorzugsweise kann im Sinne einer vorteilhaften Planung die Größe der Ladungsmenge Teil einer kommerziellen Vereinbarung zwischen einem Betreiber des Stromverteilernetzes und einem Betreiber des Energiespeichers sein.

In einer weiteren Ausgestaltung ist die Kontrolleinheit dazu vorgesehen, in zumindest einem Betriebsmodus das Laden und/oder Entladen und/oder Überführen in einen Bereitschaftsmodus des zumindest einen Energiespeichers zumindest teilweise abhängig von einem Ladezustand des zumindest einen Energiespeichers zu steuern. Durch eine Anpassung des Ladens und/oder Entladens an den Ladezustand des zumindest einen Energiespeichers kann ein besonders effektiver Ausgleich der aktuellen, lokalen Belastung des Stromverteilernetzes bei einer gleichzeitigen Vermeidung von möglichen Nachteilen für einen Betreiber des Energiespeichers erreicht werden. Vorteilhaft kann die Kontrolleinheit mit Messmitteln ausgestattet sein, mit denen eine Bestimmung des Ladezustands des zumindest einen Energiespeichers erfolgen kann. Abhängig von der Art des Energiespeichers sind dem Fachmann hierzu gängige Methoden bekannt. Vorteilhaft kann das Laden und/oder Entladen und/oder Überführen in einen Bereitschaftsmodus des zumindest einen Energiespeichers mit einem Lade-/Entladezyklus des Energiespeichers abgestimmt werden, wodurch neben einem Ausgleich der aktuellen, lokalen Belastung des Stromverteilernetzes auch eine Erhaltung einer Ladekapazität des zumindest einen Energiespeichers erzielt werden kann. Vorzugsweise können dazu in der Kontrolleinheit ein unterer Grenzwert des Ladezustands für ein mögliches Entladen und ein oberer Grenzwert für den Ladezustand für ein mögliches Laden hinterlegt sein. Die Kontrolleinheit kann vorteilhaft dazu vorgesehen sein, bei Erreichen des Grenzwerts für das mögliche Entladen während des Entladens und nach Beginn des Aufladens eine Hysterese von beispielsweise fünf Prozentpunkten der Ladekapazität des zumindest einen Energiespeichers zu berücksichtigen, bevor eine erneute Entladung begonnen werden kann, insofern weitere Bedingungen dafür gegeben sind.

Vorteilhaft ist die Kontrolleinheit dazu vorgesehen, in zumindest einem Betriebsmodus in periodischen Zeitabständen zumindest teilweise abhängig von zumindest einem das Stromverteilernetz betreffenden Parameter das Laden und/oder Entladen des zumindest einen Energiespeichers zu beginnen und/oder zu beenden. Dadurch kann ein besonders gleichmäßiger und effektiver Ausgleich der aktuellen, lokalen Belastung des Stromverteilernetzes erreicht werden. Unter einem "das Stromverteilernetz betreffenden Parameter" soll in diesem Zusammenhang eine elektrische Messgröße des Stromverteilernetzes verstanden werden, die von dessen Belastung abhängig ist, also insbesondere eine an einer in der Nähe des zumindest einen Energiespeichers befindlichen Steckdose bestimmte lokale Netzfrequenz oder lokale Netzspannung.

Es wird ferner vorgeschlagen, dass in der Kontrolleinheit zumindest ein individuell mit einem Betreiber des Stromverteilernetzes vereinbarter Steuerparameter hinterlegt ist und die Kontrolleinheit dazu vorgesehen ist, das Laden und/oder Entladen und/oder Überführen in einen Bereitschaftsmodus des zumindest einen Energiespeichers zumindest teilweise abhängig von dem zumindest einen Steuerparameter zu steuern, wodurch ein besonders zuverlässiger, gleichmäßiger und effektiver Ausgleich der aktuellen, lokalen Belastung des Stromverteilernetzes erreicht werden kann. Vorzugsweise kann durch die hinterlegten Steuerparameter eine individuelle Anpassung des durch die Kontrolleinheit durchgeführten selbsttätigen Ladens und/oder Entladens und/oder Überführens in einen Bereitschaftsmodus des zumindest einen elektrischen Energiespeichers an ein durchschnittliches Verhalten des Betreibers des zumindest einen Energiespeichers erfolgen, wodurch sich beispielsweise die Verfügbarkeit des Energiespeichers zum Zweck des Ausgleichs der Belastung des Stromverteilernetzes erhöhen lässt. Weiterhin können insbesondere Wünsche und Anforderungen sowohl des Betreibers des Stromverteilernetzes als auch des Betreibers des Energiespeichers in den Steuerparametern berücksichtigt werden, wodurch sich die Verfügbarkeit und Einsatzhäufigkeit und die Wirtschaftlichkeit der elektrischen Lade- und/oder Entladevorrichtung steigern lassen.

Vorteilhaft ist die Kontrolleinheit dazu vorgesehen, eine Zeitdauer zu erfassen und zum Auslesen verfügbar zu machen, während der der zumindest eine Energiespeicher im Laufe eines

Zeitabschnitts von beispielsweise einem Jahr zur Stabilisierung des Stromverteilernetzes mit diesem verbunden ist. Diese Zeitdauer kann ein weiterer Teil der kommerziellen Vereinbarung zwischen dem Betreiber des Stromnetzes und dem Betreiber des Energiespeichers sein.

In einer weiteren Ausgestaltung ist die Kontrolleinheit dazu vorgesehen, in zumindest einem Betriebszustand durch manuellen Eingriff eines Bedieners einen sofortigen Ladevorgang des Energiespeichers zu beginnen. Vorteilhaft kann durch den manuellen Eingriff des Bedieners ein in der Kontrolleinheit hinterlegter Mindestladezustand des Energiespeichers sichergestellt werden. Dadurch kann in einer überwiegenden Zahl der Fälle ein effektiver Ausgleich der aktuellen, lokalen Belastung des Stromverteilernetzes erzielt werden. Vorzugsweise können manuelle Eingriffe des Bedieners Teil der kommerziellen Vereinbarung zwischen dem Betreiber des Stromverteilernetzes und dem Betreiber des Energiespeichers sein, wobei vorteilhaft für den Bediener der elektrischen Lade- und/oder Entladevorrichtung eine Flexibilität hinsichtlich einer Nutzung gegeben ist. Vorzugsweise können tatsächlich vollzogene Lade- und/oder Entladevorgänge und insbesondere solche, die außerhalb von in der Vereinbarung zwischen dem Betreiber des Stromverteilernetzes und dem Betreiber des Energiespeichers als Regelzeiten festgelegten Zeiten vollzogen wurden, mittels elektronischer Stromzähler erfasst und nach vereinbarten Tarifen verrechnet werden.

### Zeichnung

Weitere Vorteile ergeben sich aus der folgenden Zeichnungsbeschreibung. In den Zeichnungen sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine elektrische Lade- und/oder Entladevorrichtung, eingebaut in ein elektrisch angetriebenes Fahrzeug, und
- Fig. 2: ein Flussdiagramm eines in einer Kontrolleinheit ablaufenden Programmablaufs.

### Beschreibung der Ausführungsbeispiele

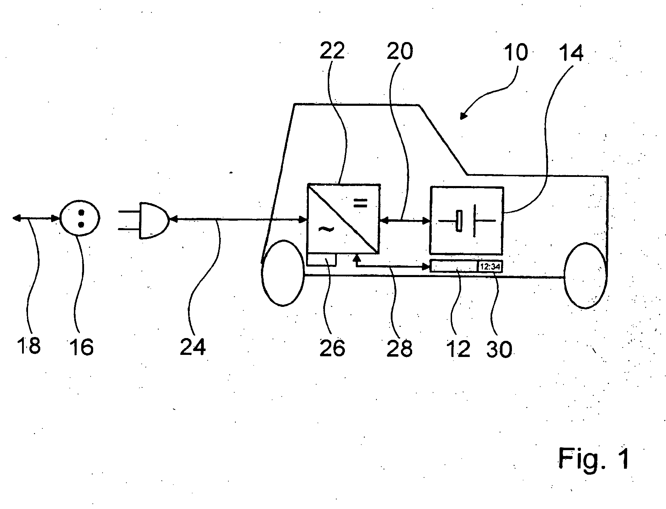

In der Fig. 1 ist ein elektrisch angetriebenes Fahrzeug 10 mit einem als Natrium-Metallchlorid-Akkumulator mit einem Energieinhalt von 30 kWh ausgebildeten elektrischen Energiespeicher 14 dargestellt. Das Fahrzeug 10 befindet sich in einer Garage, die mit einer haushaltsüblichen Steckdose 16 ausgestattet ist, die eine Verbindung zu einem Stromverteilernetz 18 herstellt. Der Energiespeicher 14 des Fahrzeugs 10 ist über eine vom Hersteller des Fahrzeugs 10 fest installierte Verbindungsleitung 20 mit einer elektrischen Lade- und/oder Entladevorrichtung verbunden, deren Kontrolleinheit 12 identisch ist mit der Kontrolleinheit des Energiespeichers 14, die dazu vorgesehen ist, ein selbsttätiges Laden und/oder Entladen und/oder Überführen in einen Bereitschaftsmodus des elektrischen Energiespeichers 14 zur dezentralen Pufferung des Stromverteilernetzes 18 durchzuführen. Die elektrische Lade- und/oder Entladevorrichtung umfasst eine Gleichrichter-/Umrichtereinheit 22, die einerseits mittels eines Kabels 24 elektrisch mit der Steckdose 16 und andererseits mittels der Verbindungsleitung 20 mit dem Energiespeicher 14 verbunden ist. Die elektrische Verbindung in Form des Kabels 24 dient auch zum Entladen des Energiespeichers 14 in das Stromverteilernetz 18. Zur Erfassung einer vom Energiespeicher 14 in das Stromverteilernetz 18 eingespeisten Energiemenge weist die Gleichrichter-/Umrichtereinheit 22 einen elektronischen Stromzähler 26 auf. Ferner ist die Gleichrichter-/Umrichtereinheit 22 durch ein Steuerungskabel 28 mit der Kontrolleinheit 12 verbunden. Die Gleichrichter-/Umrichtereinheit 22 umfasst Messmittel zur Bestimmung eines Effektivwerts einer lokalen Netzspannung U an der Steckdose 16 der Garage und kann diesbezügliche Messwerte über das Steuerungskabel 28 mit der Kontrolleinheit 12 austauschen.

Die Kontrolleinheit 12 ist dazu vorgesehen, den Effektivwert der lokalen Netzspannung U des Stromverteilernetzes 18 zur Steuerung des Ladens und/oder Entladens und/oder Überführens in einen Bereitschaftsmodus des elektrischen Energiespeichers 14 zu verwenden.

Die Kontrolleinheit 12 erhält über das Steuerungskabel 28 von der Gleichrichter-/Umrichtereinheit 22 Daten über einen Effektivwert der lokalen Netzspannung U. In der Kontrolleinheit 12 ist ein Ladezustandsalgorithmus des Energiespeichers 14 hinterlegt, mit dem die Kontrolleinheit 12 den Ladezustand (State of Charge, SOC) des Natrium-Metallchlorid-Akkumulators berechnen kann. Dem Fachmann sind dazu gängige Methoden bekannt. Einem voll aufgeladenen Natrium-Metallchlorid-Akkumulator entspricht ein SOC-Wert von 100%. Die Kontrolleinheit 12 ist dazu vorgesehen, das Laden und/oder Entladen und/oder Überführen in einen Bereitschaftsmodus des Energiespeichers 14 abhängig von einem Ladezustand des Energiespeichers 14 zu steuern.

Die Kontrolleinheit 12 ist mit einer Uhr 30 ausgestattet und dazu vorgesehen, das Laden und/oder Entladen und/oder Überführen in einen Bereitschaftsmodus des elektrischen Energiespeichers 14 abhängig von einer Tageszeit zu steuern. Weiterhin ist die Kontrolleinheit 12 dazu vorgesehen, während des Ladens und/oder Entladens des Energiespeichers 14 mittels der von der Gleichrichter-/Umrichtereinheit 22 übermittelten Messung der elektrischen Leistung, die von dem Energiespeicher 14 durch Laden und/oder Entladen aus dem und/oder in das Stromverteilernetz 18 ausgenommen und/oder abgegeben wird, und unter Benutzung der Uhr 30 eine vom Energiespeicher 14 durch Laden und/oder Entladen aus dem und/oder in das Stromverteilernetz 18 aufgenommene und/oder abgegebene elektrische Energiemenge zu berechnen.

In der Kontrolleinheit 12 sind individuell mit einem Betreiber des Stromverteilernetzes 18 vereinbarte Steuerparameter hinterlegt. Diese Steuerparameter betreffen einen Bereich des Ladezustands des Energiespeichers 14, der für den Austausch elektrischer Energie mit dem Stromverteilernetz 18 zur Verfügung steht, sowie entsprechende Zeiten (Tageszeiten und Wochentage). Die Kontrolleinheit 12 ist dazu vorgesehen, das Laden und/oder Entladen und/oder Überführen in einen Bereitschaftsmodus des Energiespeichers 14 zumindest teilweise abhängig von diesen Steuerparametern zu steuern.

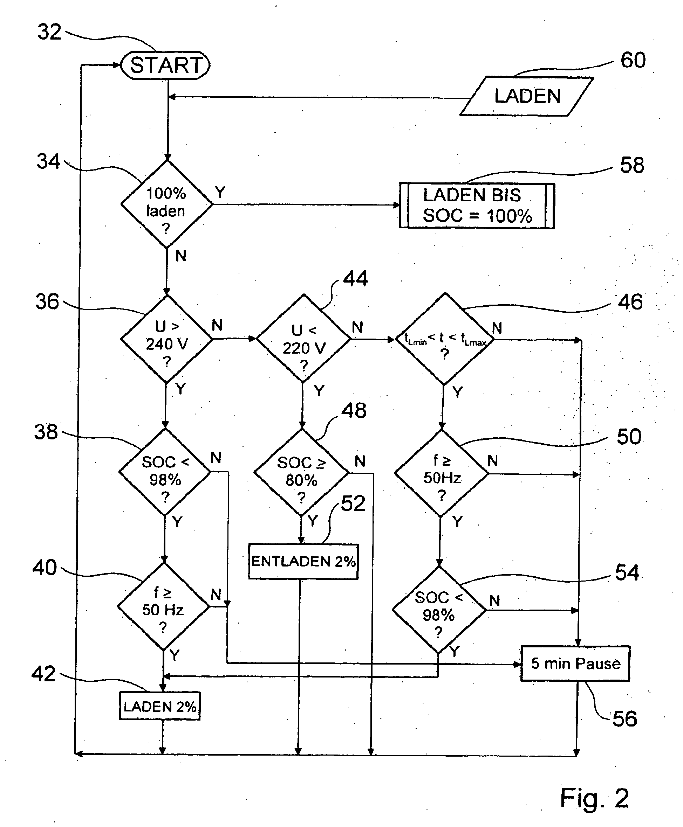

Im Folgenden wird das selbsttätige Laden und/oder Entladen und/oder Überführen in einen Bereitschaftsmodus des Energiespeichers 14 durch die Kontrolleinheit 12 beschrieben. In der Figur 2 ist ein Ausführungsbeispiel dargestellt.

Das selbsttätige Laden und/oder Entladen und/oder Überführen in einen Bereitschaftsmodus des Energiespeichers 14 wird nur dann ausgeführt, wenn die elektrische Verbindung durch das Kabel 24 wie beschrieben besteht. Die Kontrolleinheit 12 ist immer aktiviert, wenn der Energiespeicher 14 betriebsbereit ist.

Sobald zwischen dem Fahrzeug 10 und der Steckdose 16 die Verbindung durch das Kabel 24 hergestellt ist, startet die Kontrolleinheit 12 einen in der Fig. 2 als Flussdiagramm dargestellten Programmablauf. In einer ersten Abfrage 34 nach einem Start 32 des Programmablaufs wird geprüft, ob der Bediener manuell den Wunsch nach einem Ladezustand des Energiespeichers 14 von 100% eingegeben hat. In einer zweiten Abfrage 36 wird die Höhe der lokalen Netzspannung U geprüft. Beträgt diese mehr als 240 V, wird der Ladezustand (SOC-Wert) des Energiespeichers 14 in einer weiteren Abfrage 38 geprüft. Beträgt er weniger als 98% und ist die Frequenz f der Netzspannung U bei einer Abfrage 40 größer als oder gleich 50 Hz, dann beginnt ein Laden 42 des Energiespeichers 14. Das Laden 42 wird mindestens für eine Kapazität von zwei Prozentpunkten des SOC-Werts bis zu einem nächsten Start 32 des Programmablaufs ausgeführt. Beträgt die Frequenz f der Netzspannung bei Abfrage 40 weniger als 50 Hz, wird eine Pause 56 von fünf Minuten Dauer ausgeführt, bevor dar Programmablauf erneut beim Start 32 beginnt. Bei einer gemessenen lokalen Netzspannung U von weniger als 240 V in Abfrage 36 führt der Programmablauf zu einer Abfrage 44, die prüft, ob die lokale Netzspannung U kleiner als 220 V ist. Ist dies der Fall, erfolgt eine weitere Abfrage 48 des Ladezustands, wobei bei einem Ladezustand von größer oder gleich 80% eine Entladung 52 ins Stromverteilernetz 18 in Höhe von zwei Prozentpunkten des SOC-Werts des Energiespeichers 14 erfolgt. Danach kehrt der Programmablauf wieder zum Start 32 zurück. Beträgt die lokale Netzspannung U bei der Abfrage 44 nicht weniger als 220 V, so leitet der Programmablauf nach der Abfrage 44 zur Höhe der Netzspannung U zu einer Abfrage 46 hinsichtlich der Tageszeit über. Liegt die aktuelle Tageszeit t innerhalb der in der Kontrolleinheit 12 hinterlegten Zeiten erwünschten Ladens und ist die Frequenz f der Netzspannung U bei einer anschließende Abfrage 50 größer oder gleich 50 Hz und ist der Ladezustand des Energiespeichers 14 bei einer Abfrage 54 kleiner als 98%, wird das Laden des Energiespeichers 14 gestartet und für eine Kapazität von zwei Prozentpunkten des SOC-Werts durchgeführt. Danach kehrt der Programmablauf zum Start 32 zurück. Liegt die Tageszeit bei der Abfrage 46 außerhalb der in der Kontrolleinheit 12 hinterlegten Zeiten erwünschten Ladens, wird eine Pause 56 von fünf Minuten Dauer ausgeführt.

Um für den Betreiber des Fahrzeugs 10 die notwendige Flexibilität für den außerplanmäßigen Fall eines notwendigen 100%-igen Aufladens des Energiespeichers 14 unabhängig von anderen als den Parametern des Energiespeichers 14 zu gewährleisten, ist die Kontrolleinheit 12 dazu vorgesehen, durch manuellen Eingriff eines Bedieners einen sofortigen Ladevorgang zu beginnen. Bei manueller Betätigung einer Taste (Modus "LADEN" 60) an der Kontrolleinheit 12 wird der Betriebsmodus geändert und der Programmablauf bei der Abfrage 34 unabhängig von der Höhe der lokalen Netzspannung U zu einem in der Kontrolleinheit 12 hinterlegten, eigenständigen Unterprogramm 58 ("Laden bis SOC = 100%") des Programmablaufs geleitet, woraufhin die Kontrolleinheit 12 mit dem Laden des Energiespeichers 14 beginnt. Nach Erreichen eines Ladezustands von SOC = 100% werden sowohl das Unterprogramm 58 als auch der gesamte Programmablauf beendet.

### Bezugszeichen

- 10: Fahrzeug
- 12: Kontrolleinheit
- 14: Energiespeicher
- 16: Steckdose
- 18: Stromverteilernetz
- 20: Verbindungsleitung
- 22: Gleichrichter-/Umrichtereinheit
- 24: Kabel
- 26: Stromzähler
- 28: Steuerungskabel
- 30: Uhr
- 32: Start
- 34: Abfrage
- 36: Abfrage
- 38: Abfrage
- 40: Abfrage
- 42: Laden
- 44: Abfrage
- 46: Abfrage
- 48: Abfrage
- 50: Abfrage
- 52: Entladen
- 54: Abfrage
- 56: Pause
- 58: Unterprogramm
- 60: Modus "LADEN"

## Patentansprüche

1. Elektrische Lade- und/oder Entladevorrichtung eines zumindest teilweise elektrisch angetriebenen Fahrzeuges (10), mit einer Kontrolleinheit (12), die dazu vorgesehen ist, ein selbsttätiges Laden und/oder Entladen und/oder Überführen in einen Bereitschaftsmodus zumindest eines elektrischen Energiespeichers (14) zur dezentralen Pufferung eines Stromverteilernetzes (18) zum dadurch zumindest teilweise Ausgleichen von lokalen lastabhängigen Schwankungen von elektrischen Eigenschaften des Stromverteilernetzes (18) durchzuführen, wobei eine Kommunikation mit einer Einrichtung, die mit dem Stromverteilernetz (18) in Zusammenhang steht, aktiv vermieden wird,
wobei
die Kontrolleinheit (12) dazu vorgesehen ist, in zumindest einem Betriebsmodus eine Frequenz, eine Amplitude und/oder einen Effektivwert einer lokalen Netzspannung des Stromverteilernetzes (18) zu messen und zur Steuerung des Ladens und/oder des Entladens und/oder Überführens in einen Bereitschaftsmodus des zumindest einen elektrischen Energiespeichers (14) zu verwenden, wobei die Kontrolleinheit (12) von der festgestellten Netzspannung abhängig über einen Beginn, eine Pause oder ein Beenden des Ladens und/oder des Entladens und/oder des Überführens in den Bereitschaftsmodus des zumindest einen Energiespeichers (14) eigenständig aufgrund einer hinterlegten Programmierung entscheidet.

2. Elektrische Lade- und/oder Entladevorrichtung nach Anspruch 1, **dadurch gekennzeichnet, dass** die Kontrolleinheit (12) dazu vorgesehen ist, in zumindest einem Betriebsmodus das Laden und/oder Entladen und/oder Überführen in einen Bereitschaftsmodus des zumindest einen elektrischen Energiespeichers (14) zumindest teilweise abhängig von einer Tageszeit zu steuern.

3. Elektrische Lade- und/oder Entladevorrichtung nach Anspruch 1 oder 2, **dadurch gekennzeichnet, dass** die Kontrolleinheit (12) dazu vorgesehen ist, in zumindest einem Betriebsmodus das Laden und/oder Entladen und/oder Überführen in einen Bereitschaftsmodus des zumindest einen elektrischen Energiespeichers (14) zumindest teilweise abhängig von einer von dem zumindest einen elektrischen Energiespeicher (14) aus dem Stromverteilernetz (18) aufgenommenen Energiemenge und/oder von einer von dem zumindest einen elektrischen Energiespeicher (14) in das Stromverteilernetz (18) abgegebenen Energiemenge zu steuern.

4. Elektrische Lade- und/oder Entladevorrichtung nach einem der vorhergehenden Ansprüche, **dadurch gekennzeichnet, dass** die Kontrolleinheit (12) dazu vorgesehen ist, in zumindest einem Betriebsmodus das Laden und/oder Entladen und/oder Überführen in einen Bereitschaftsmodus des zumindest einen Energiespeichers (14) zumindest teilweise abhängig von einem Ladezustand des zumindest einen Energiespeichers (14) zu steuern.

5. Elektrische Lade- und/oder Entladevorrichtung nach einem der vorhergehenden Ansprüche, **dadurch gekennzeichnet, dass** die Kontrolleinheit (12) dazu vorgesehen ist, in zumindest einem Betriebsmodus in periodischen Zeitabständen zumindest teilweise abhängig von zumindest einem das Stromverteilernetz(18) betreffenden Parameter das Laden und/oder Entladen und/oder Überführen in einen Bereitschaftsmodus des zumindest einen Energiespeichers (14) zu beginnen und/oder zu beenden.

6. Elektrische Lade- und/oder Entladevorrichtung nach einem der vorhergehenden Ansprüche, **dadurch gekennzeichnet, dass** in der Kontrolleinheit (12) zumindest ein individuell mit einem Betreiber des Stromverteilernetzes (18) vereinbarter Steuerparameter hinterlegt ist und die Kontrolleinheit (12) dazu vorgesehen ist, das Laden und/oder Entladen und/oder Überführen in einen Bereitschaftsmodus des zumindest einen Energiespeichers (14) zumindest teilweise abhängig von dem zumindest einen Steuerparameter zu steuern.

7. Elektrische Lade- und/oder Entladevorrichtung nach einem der vorhergehenden Ansprüche, **dadurch gekennzeichnet, dass** die Kontrolleinheit (12) dazu vorgesehen ist, in zumindest einem Betriebszustand durch manuellen Eingriff eines Bedieners einen sofortigen Ladevorgang des Energiespeichers (14) zu beginnen.

## Claims

1. Electrical charging and/or discharging device of an at least partially electrically driven vehicle (10), with a control unit (12) that is provided to carry out an automatic charging and/or discharging and/or transferring into a stand-by mode of at least one electrical energy storage (14) for a decentralized buffering of a power distribution grid (18) to thereby at least partially compensate local load depending variations of electric properties of the power distribution grid (18), wherein a communication with an apparatus, which is associated with the power distribution grid (18), is actively avoided,
wherein
the control unit (12) is provided to, in at least one operative mode, measure a frequency, an amplitude and/or an effective value of a local grid voltage of the power distribution grid (18) and use the same for controlling the charging and/or discharging and/or transferring into a stand-by mode of the at least one electrical energy storage (14), wherein the control unit (12) autonomously decides, in dependency of the determined grid voltage, on a start, a pause or a termination of the charging and/or discharging and/or transferring into a stand-by mode of the at least one electrical energy storage (14) on the basis of a stored programming.

2. Electrical charging and/or discharging device according to claim 1, **characterised in that** the control unit (12) is provided, in at least one operative mode, to control the charging and/or discharging and/or transferring into a stand-by mode of the at least one electrical energy storage (14) at least partially depending on a time of day.

3. Electrical charging and/or discharging device according to claim 1 or 2, **characterised in that** the control unit (12) is provided, in at least one operative mode, to control the charging and/or discharging and/or transferring into a stand-by mode of the at least one electrical energy storage (14), at least partially depending on an energy quantity taken up by the at least one electrical storage (14) from the power distribution grid (18) and/or depending on an energy quantity fed into the power distribution grid (18) by the at least one electrical storage (14).

4. Electrical charging and/or discharging device according to one of the preceding claims, **characterised in that** the control unit (12) is provided, in at least one operative mode, to control the charging and/or discharging and/or transferring into a stand-by mode of the at least one electrical energy storage (14), at least partially depending on a charging state of the at least one energy storage (14).

5. Electrical charging and/or discharging device according to one of the preceding claims, **characterised in that** the control unit (12) is provided, in at least one operative mode, to start and/or to finish the charging and/or discharging and/or transferring into a stand-by mode of the at least one electrical energy storage (14) in periodic time intervals, at least partially depending on a parameter concerning the power distribution grid (18).

6. Electrical charging and/or discharging device according to one of the preceding claims, **characterised in that** at least one controlling parameter arranged with a provider of the power distribution grid (18) is stored in the control unit (12), and the control unit (12) is provided to control the charging and/or discharging and/or transferring into a stand-by mode of the at least one electrical energy storage (14) at least partially depending on the at least one control parameter.

7. Electrical charging and/or discharging device according to one of the preceding claims, **characterised in that** the control unit (12) is provided, in at least one operative mode, to start an immediate charging procedure of the energy storage (14) by a user's manual action.

## Revendications

1. Dispositif électrique de charge et/ou décharge d'un véhicule (10) propulsé au moins partiellement de manière électrique, avec une unité de contrôle (12), laquelle est prévue pour exécuter une charge et/ou une décharge et/ou un transfert automatique dans un mode de veille d'au moins un réservoir d'énergie électrique (14) pour un tamponnement décentralisé d'un réseau distributeur électrique (18) pour ainsi effectuer une compensation au moins partielle de variations locales en fonction de la charge de propriétés électriques du réseau distributeur électrique (18), une communication avec un dispositif qui est en rapport avec le réseau distributeur électrique (18) étant activement empêchée,
dans lequel
l'unité de contrôle (12) est prévue, dans au moins un mode opérationnel, pour mesurer une fréquence, une amplitude et/ou une valeur effective d'un voltage local de réseau du réseau distributeur électrique (18) et utiliser ceux-ci pour contrôler la charge et/ou la décharge et/ou le transfert dans un mode de veille de l'au moins un réservoir d'énergie électrique (14), l'unité de contrôle (12) déterminant de manière autonome, sur la base d'une programmation déposée, un commencement, une pause ou une terminaison de la charge et/ou de la décharge et/ou du transfert dans le mode de veille de l'au moins un réservoir d'énergie (14) en fonction du voltage de réseau constaté.

2. Dispositif électrique de charge et/ou décharge selon la revendication 1,
**caractérisé en ce que**
l'unité de contrôle (12) est prévue à contrôler, dans au moins un mode opératif, le charge et/ou décharge et/ou transfert dans le mode de veille de l'au moins un réservoir d'énergie électrique (14) en dépendance au moins partiellement de l'heure du jour.

3. Dispositif électrique de charge et/ou décharge selon la revendication 1 ou 2,
**caractérisé en ce que**
l'unité de contrôle (12) est prévue à contrôler, dans au moins un mode opératif, le charge et/ou décharge et/ou transfert dans le mode de veille de l'au moins un réservoir d'énergie électrique (14) au moins partiellement en dépendance d'une quantité d'énergie reçu par l'au moins un réservoir d'énergie électrique (14) du réseau distributeur électrique (18), et/ou en dépendance d'une quantité d'énergie délivrée au réseau distributeur électrique (18) par l'au moins un réservoir d'énergie électrique (14).

4. Dispositif électrique de charge et/ou décharge selon l'une quelconque des revendications précédentes, **caractérisé en ce que**
l'unité de contrôle (12) est prévue à contrôler, dans au moins un mode opératif, le charge et/ou décharge et/ou transfert dans un mode de veille de l'au moins un réservoir d'énergie (14) au moins partiellement en dépendance d'un état de charge de l'au moins un réservoir d'énergie (14).

5. Dispositif électrique de charge et/ou décharge selon l'une quelconque des revendications précédentes, **caractérisé en ce que**
l'unité de contrôle (12) est prévue à commencer et/ou terminer, dans au moins un mode opératif, le charge et/ou décharge et/ou transfert dans un mode de veille de l'au moins un réservoir d'énergie (14) au moins partiellement en dépendance d'au moins un paramètre concernant le réseau distributeur électrique (18), dans des intervalles périodiques.

6. Dispositif électrique de charge et/ou décharge selon l'une quelconque des revendications précédentes, **caractérisé en ce que**
dans l'unité de contrôle (12) est déposé au moins un paramètre de contrôle convenu individuellement avec un gérant du réseau distributeur électrique (18), et que l'unité de contrôle (12) est prévue à contrôler le charge et/ou décharge et/ou transfert dans un mode de veille de l'au moins un réservoir d'énergie (14) au moins partiellement en dépendance de l'au moins un paramètre de contrôle.

7. Dispositif électrique de charge et/ou décharge selon l'un quelconque des revendications précédentes, **caractérisé en ce que**
l'unité de contrôle (12) est prévue à commencer, dans au moins un mode opératif, un processus immédiat de charge du réservoir d'énergie (14) par une action manuelle d'un opérateur.
